# EUROPEAN PATENT SPECIFICATION

(11) **EP 1 601 256 B1**
(45) Date of publication and mention of the grant of the patent: **25.06.2014**
(21) Application number: 04717410.7
(22) Date of filing: 04.03.2004
(51) Int. Cl.: A23K 1/175, A23K 1/18, A23K 1/16

(54) **DIETARY SUPPLEMENT FOR ATHLETIC PETS**
NAHRUNGSERGÄNZUNG FÜR ATHLETISCHE HAUSTIERE
SUPPLEMENT ALIMENTAIRE POUR ANIMAUX DOMESTIQUES SPORTIFS

(30) Priority: 05.03.2003 US 382289
(43) Date of publication of application: 07.12.2005
(73) Proprietor: Nestec S.A., 1800 Vevey (CH)
(72) Inventor: SIDEBOTTOM, Monique, Y., St. Louis, MO 63125 (US); REYNOLDS, Arleigh, J., Salcha, AK 99714 (US)
(74) Representative: Rupp, Christian
(86) International application number: PCT/US2004/006513
(87) International publication number: WO 2004/077961

(56) References cited:
- CH-A- 554 644
- DE-A- 19 958 620
- DE-A- 19 958 692
- FR-A- 2 574 631
- US-A- 5 017 389
- US-A- 5 776 913
- US-A1- 2002 018 828
- US-A1- 2002 182 276
- US-B1- 6 238 708
- US-B1- 6 379 727

## Description

### BACKGROUND OF THE INVENTION

This invention relates generally to food products for pets, and more particularly to a food product formulated to prepare a pet for strenuous activity and replenish nutrients in a pet after strenuous activity.

While pet care product customers presently have a host of suppliers and products to choose from, it may take substantial time, effort, and investigation to determine a product that best suits a particular pet's needs among the available alternatives. This is particularly true in the case of pet foods. While veterinarians and other professionals may assist in recommending a brand of pet food for a particular pet, pet foods are typically inass manufactured to meet the needs of an average pet within a selected range of pets, such as pet age and/or size. Nutritional needs, however, vary from pet to pet, and an optimal regimen of appropriate nutrients for a particular pet or breed of pet are beneficial. Nutritional requirements for more athletic pets, for example, canine athletes such as performing dogs, dogs utilized in athletic competitions (e.g. agility trials), sled dogs, hunting dogs and dogs used in law enforcement and rescue work, are especially important as the energy expended by these animals is unusually high over certain periods of time.

US2002/0018828 discloses a method of administering a milk substitute to a pet in need of critical care. The composition contains from about 10 to 25% carbohydrate, preferably 15 to 17% carbohydrate. The source of the carbohydrate is preferably a mixture of lactose and maltodextrin. The composition also includes a number of other ingredients such as protein, fatty acids, vitamins and minerals which are specified as being essential for healthy gut function.

DE 19958692 discloses a vitamin and/or mineral supplement for cats and dogs based on fruit or vegetable drinks or purees. Sugar or sugar substitutes such as white sugar, dextrose and glucose syrup may also be present. No maltodextrin is present. The compositions can be used for enhancing the general health and well-being of a dog or a cat.

CH 554644 discloses a food product based on meat and soya products. Carbohydrate such as glucose can be present in an amount of between 30 and 45%. The compositions do not include maltodextrin.

FR 2574631 discloses a vitamin and mineral supplement for animals. The supplement includes ingredients such as glucose, calcium, magnesium as well as vitamins and minerals such as zinc, manganese, cobalt, niacin etc. The compositions do not include maltodextrin. The compositions can be used for enhancing the general health and well-being of a dog or a cat.

US 5,776,913 discloses a food composition that can be used to treat animals suffering from metabolic disturbances such as weight loss arising from cancer, for example. The compositions are high in fat, low in carbohydrates and are supplemented with arginine and polyunsaturated omega-3 and omega-6 fatty acids. The carbohydrate comprises 1 to 27% by dry weight of the composition and the presence of the omega-3 and omega-6 fatty acids is particularly critical.

US 6,238,708 discloses compositions for controlling the glycemic and insulinemic responses in animals such as a dog following the consumption of food. The composition includes a source of protein, a source of fat and a source of carbohydrate from a grain source other than rice which means that glucose is slowly assimilated into the body.

US 2002/0182276 discloses a food product including as the carbohydrate source an extract of the Indian Mulberry plant (Noni) in an amount of 3 to 7% by weight of the total dietary fibre composition contained within the animal food product.

US 6,379,727 discloses a flavouring composition that can be sprinkled onto pet foods, for example. Each flavouring composition comprises maltodextrin, tricalcium phosphate and an oleoresin flavouring agent. The flavouring composition typically comprises 95 parts maltodextrin. When the composition is applied to the pet food, one to two ounces of the flavouring composition is applied to a typical meal portion. No vitamins or minerals or antioxidants are disclosed.

US 5,017,389 discloses a nutritional drink composition for dogs and other animals. The drink contains water, dextrose, glycine, electrolytes, sodium carbonate and other vitamin and minerals The carbohydrate typically comprises 1 to 5% of the composition.

DE 19958620 discloses a food product for pet comprising vitamins, minerals and plant, vegetable, fish and meat products. Compositions comprising maltodextrin are not disclosed.

WO 2004/026287 and FR 2771259 both disclose nutritional compositions comprising maltodextrin, vitamins, minerals and an antioxidant. The composition of WO 2004/026287 comprises 20.35% maltodextrin. The composition of FR 2771259 comprises 28.2% maltodextrin.

### BRIEF SUMMARY OF THE INVENTION

The present invention provides food compositions formulated to prepare a pet for strenuous activity and replenish nutrients in a pet after strenuous activities, and methods for avoiding or reducing the undesirable effects of glycogen depletion in at least one of a pet's liver and muscles due to periods of strenuous activity, as defined in the appended claims. The food compositions comprise carbohydrates which are easily assimilated by the pet and provide a readily available source of glucose, and vitamins, minerals, and antioxidants to replenish at least some of the vitamins, minerals and anti-oxidants that are expended at a rate that is higher during strenuous activity than during non-strenuous activity.

It will be appreciated that whilst various compositions and methods have been described herein, the scope of the present invention is as defined in the appended claims.

A method is described to help pets recover from periods of strenuous activity. The method comprises providing a source of carbohydrates that includes readily available glucose and providing a replenishment sources of vitamins, minerals, and antioxidants which are expended at a rate that is higher during the strenuous activity than during non-strenuous activity.

A method is described for preparing a pet for strenuous activity and helping the pet recover from the strenuous activity comprising providing a food composition to the pet such that up to about three grams of carbohydrates per kilogram of body weight of the pet are provided to the pet.

A method for providing an energy boost to a pet is described that comprises providing a food composition to the pet which includes up to three grams of carbohydrates per kilogram of body weight of the pet and which includes a replenishment source of vitamins, minerals, and antioxidants that are expended during periods of strenuous activity.

### BRIEF DESCRIPTION OF THE DRAWINGS

Figure 1 is a table describing nutrient levels within a dietary supplement for pets.
Figure 2 is a table describing one embodiment of a mineral premix formula for use within the dietary supplement described in Figure 1.
Figure 3 is a table describing one embodiment of a vitamin premix formula for use within the dietary supplement described in Figure 1.

### DETAILED DESCRIPTION OF THE INVENTION

For athletic pets and, in particular, working dogs, for example, canine athletes such as performing dogs, dogs utilized in athletic competitions (e.g. agility trials), sled dogs, hunting dogs, police dogs, rescue dogs and the like, high amounts of energy can be expended and physical recovery of the animal after expending such energy depends, at least in part, on the diet the pet receives. Similarly, domestic pets may expend high amounts of energy in bouts of play with members of their human family, such as children, and may appear at least temporarily exhausted afterwards. Major nutrient categories are moisture, carbohydrates, proteins, fats (lipids), fiber, vitamins and minerals. Receiving these nutrients in a proper balance, and at proper times, allows for increased performance and better recover for the animals.

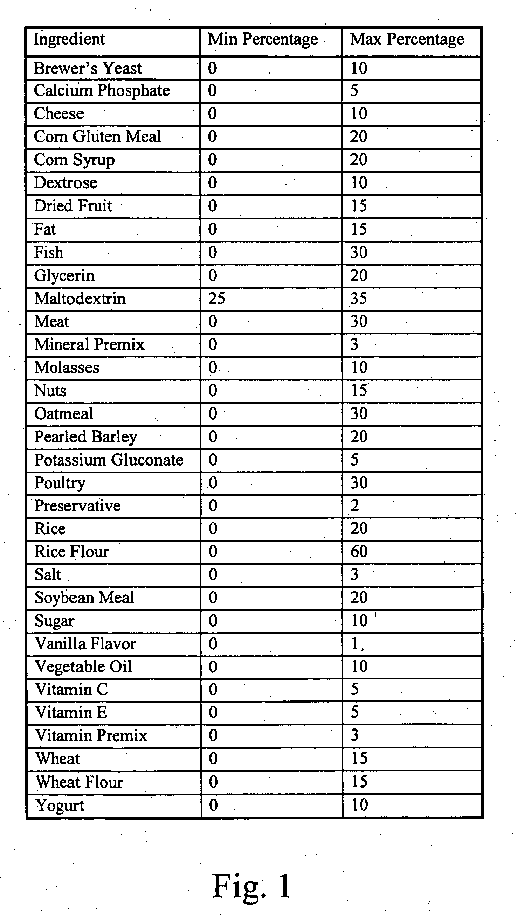

Figure 1 is a table illustrating component ranges of a dietary supplement for pets that helps pets increase performance during strenuous activities and also helps pets recover after expending high amounts of energy. The dietary supplement helps the pets increase performance and physically recover by providing a convenient, ready to use, and easily dispensed source of complex and simple carbohydrates. In one example, the dietary supplement is in a palatable form, similar to a treat, which provides the above described convenience and ease of use over known supplements. The dietary supplement is also easily assimilated by the pet, as the supplement provides a source of glucose polymers which are rapidly absorbed into the blood stream of the pet. The dietary supplement also provides vitamins, minerals, and antioxidants which are expended at higher rates during periods of high activity or exercise than during periods of low or moderate activity and exercise. While the examples described herein are described as being in a treat form, other examples of the supplement exist, for example, liquid and gel.

Diets high in calories from high quality sources of carbohydrates, proteins, and fats help improve athletic pet performance. Therefore, the right blend of nutrients can improve athletic pet performance and decrease physical recovery times of such athletic pets after performances. Carbohydrates are the best source of fuel for such pets. Carbohydrates efficiently supply the energy athletic pets need in performing their strenuous activities. During light to moderate activities, the body relies primarily on fat for energy. But during intense physical activities, such as those outlined above, an athletic pet's body utilizes glycogen to keep up a steady energy supply.

However, without a readily available replenishment source of glucose, the body harvests glycogen from the liver and converts it to glucose. Carbohydrates replenish the glucose supply in the blood, and may help to replenish glycogen supply in the liver. Therefore, such carbohydrates are important for energy before, during strenuous athletic activities performed by such athletic pets and after such performances, for re-filling depleted glycogen stores. Alternatively, if glycogen is obtained from the liver, the energy harvest in and of itself is another type of expended energy. Such expenditures are not rapidly made up by the body. The reactions must be repeated in reverse during replenishment of the liver, for example, and such processes take time. The food composition herein described provides a source of glucose for the blood which allows improved maintenance of blood glucose concentrations, and helps to prevent the time consuming removal and replenishment process for converting glycogen obtained from the liver. In addition, there is a direct relationship between blood glucose concentration after exercise and muscle glycogen replacement.

Referring specifically to Figure 1, a dietary supplement for pets that provides such nutritional needs includes, in a specific example, between 0% and 10% by weight brewer's yeast, between 0% and 5% by weight calcium phosphate, between 0% and 10% by weight cheese, between 0% and 20% by weight corn gluten meal, between 0% and 20% by weight corn syrup, between 0% and 10% by weight dextrose, between 0% and 15% by weight dried fruit, between 0% and 15% by weight fat, between 0% and 30% by weight fish, between 0% and 20% by weight glycerin, between 25% and 35% by weight maltodextrin, between 0% and 30% by weight meat, between 0% and 3% by weight mineral premix, between 0% and 10% by weight molasses, between 0% and 15% by weight nuts, between 0% and 30% by weight oatmeal, between 0% and 20% by weight pearled barley, between 0% and 5% by weight potassium gluconate, between 0% and 30% by weight poultry, between 0% and 2% by weight preservatives, between 0% and 20% by weight rice, between 0% and 60% by weight rice flour, between 0% and 3% by weight salt, between 0% and 20% by weight soybean meal, between 0% and 10% by weight sugar, between 0% and 1% by weight vanilla flavor, between 0% and 10% by weight vegetable oil, between 0% and 5% by weight vitamin C, between 0% and 5% by weight vitamin E, between 0% and 3% by weight vitamin premix, between 0% and 15% by weight wheat, between 0% and 15% by weight wheat flour, and between 0% and 15% by weight yogurt.

The dietary supplement includes maltodextrin, a glucose polymer which provides a rapidly available source of glucose. Maltodextrin requires less hydration per glucose molecule than does the same amount of carbohydrate supplied as straight glucose. Maltodextrins provide a rapidly available source of glucose without inducing gastric distress, such as osmotic diarrhea and/or vomiting, which are often associated with bolus ingestion of straight glucose. As described further below, studies have demonstrated that post-exercise muscle glycogen replacement is enhanced if maltodextrins are administered within the first 15 to 30 minutes of recovery. The maltodextrin utilized in the dietary supplement described herein provides glucose more rapidly than longer chained carbohydrates such as starches and nearly as rapidly as straight glucose.

The dietary supplement includes between 25% and 35% by weight maltodextrin. In one example, the dietary supplement includes greater than 30% by weight maltodextrin. Maltodextrin provides a supply of glucose to the blood at a rate faster than other sources of complex carbohydrates. In another example, the dietary supplement provides between 250 mg and 350 mg of vitamin C, and between 200 mg and 400 mg of Vitamin E. By replenishing vitamin E, muscle damage which can occur during athletic events may be reduced or eliminated.

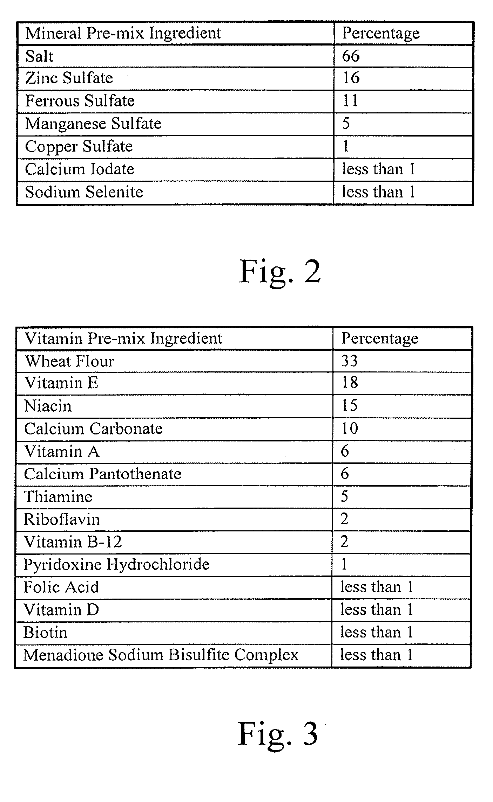

Figure 2 is a table describing one example of a mineral premix formula for use within the dietary supplement. The mineral premix includes 66% salt, 16% zinc sulfate, 11% ferrous sulfate, 5% manganese sulfate, 1% copper sulfate, less than 1% calcium iodate, and less than 1% sodium selenite. It should be understood that other examples of a mineral premix formula exist, and the above described example is intended as only one example of a mineral premix formula.

Figure 3 is a table describing one example of a vitamin premix formula for use within the dietary supplement. The vitamin premix includes 33% wheat flour as the carrier, 18% vitamin E, 15% niacin, 10% calcium carbonate, 6% vitamin A, 6% calcium pantothenate, 5% thiamine, 2% riboflavin, 2% vitamin B-12, 1% pyridoxine hydrochloride, and less than 1% of each of folic acid, vitamin D, biotin, and menadione sodium bisulfite complex. It should be understood that other examples of a vitamin premix formula exist, and the above described example is intended as only one example of a vitamin premix formula.

In a specific example, the dietary supplement includes 1.2% by weight calcium phosphate, 2.0% by weight corn syrup, 5.0% by weight dextrose, 30.0% by weight maltodextrin, 0.5% by weight mineral premix, 2.5% by weight molasses, 2.0% by weight potassium gluconate, 53.5% by weight rice flour, 1.0% by weight salt, 1.2% by weight vitamin C, 1.0% by weight vitamin E, and less than 0.1% by weight vitamin premix.

The above described dietary supplement contains simple and complex carbohydrates, antioxidants, vitamins, and minerals in a palatable treat form. The carbohydrate mixture provides a rapidly available energy (e.g. glucose) source. The antioxidants help replace those lost during exercise, and the vitamins and minerals ensure adequate intakes of these nutrients to counteract an increased demand for these nutrients during periods of exercise. In another example, the antioxidant astaxanthin is included in the dietary supplement in an amount of 0.5 mg to 10 mg per serving of the dietary supplement.

The dietary supplement was tested on a group of dogs, and after having ingested the treat, the dogs showed an average increase in blood glucose of about 4 mg/dl within about 30 minutes after ingestion. After about an hour, there was an average increase in blood glucose of about 10 mg/dl. A control group of dogs that did not ingest the dietary supplement showed no change in blood glucose levels, and several had decreases in blood glucose levels of about -2 mg/dl.

In another study it was found that immediate post-exercise carbohydrate supplementation in a group of pets had replenishments of their glycogen stores to a level between about 90% to about 100% within 24 hours after the strenuous exercise. Pets that were not given the dietary supplement typically replenished their glycogen stores to about 75% of their pre-exercise concentrations within the 24 hour period. Should the athletic activities continue over a period of several days, it is easily understood how a 75% per day replenishment level could cause adverse effects, both in health and athletic ability of the pet, as complete muscle glycogen replacement between bouts of exercise may play an important role in maintaining the health and performance of animals working several days in a row.

In another example, the dietary supplement compositions as described herein further include a nutritionally balanced mixture of proteinaceous and farinaceous ingredients. The dietary supplement compositions are not intended to be restricted to a specific listing of ingredients since such a listing is largely dependent on the desired nutritional balance for the dog and also on the availability of ingredients to the manufacturer. In addition to the proteinaceous and farinaceous materials described above, the dietary supplement compositions generally include vitamins, minerals, and other additives such as preservatives, emulsifiers and humectants. The specific percentages for each of the ingredients listed above, and shown in Figure 1, including for example, the relative proportions of vitamins, minerals, fat, protein and carbohydrate, is determined by specific manufacturers.

To make one example of the dietary supplement, the proteinaceous and farinaceous materials and additional desired materials, as chosen by availability and nutritional desirability, are combined in a typical dough mixer and well blended to form an admixture. The admixture is then formed into continuous rectangular ropes using a cold forming extruder. These ropes are fed onto a conveyor belt where they are cut into pieces by a guillotine or rotary cutting device. The pieces then pass into a cooling tunnel and are put into individual packages, which are eventually grouped into cases for shipment. The finished products can either be sold individually, or by the case.

The dietary supplement compositions described herein are not intended to be limited to a specific listing of ingredients because such ingredients will depend on such factors as, for example, the desired nutritional balance for the specific type of pet, the amount of strenuous activities performed by the pet, the exercise regimen of the pet, and availability of ingredients to the manufacturer. However, the dietary supplement compositions are intended to provide a carbohydrate source of glucose, to the pet quickly, for recovery after periods of strenuous activity, without causing gas and causing other internal problems such as hypo-glycemia, and osmotic diarrhea and/or vomiting. In one example, the dietary supplement composition provides up to three grams of carbohydrates per kilogram of body weight of the pet.

The dietary supplement described herein is utilized to provide energy during strenuous activity and to promote glycogen replenishment between bouts of exercise. The dietary supplement also provides several nutrients that are utilized at higher levels during exercise (i.e. B-vitamins, minerals, and antioxidants). The dietary supplement therefore promotes stamina during exercise or other strenuous activities and can promote recovery between such periods. Further and in one example, the dietary supplement is provided in a convenient and palatable form, such as in treat form or in a form similar to a treat. The convenient treat or treat-like form therefore makes it easier for the pet handler to administer at the proper time, and decreases the number of products that must be administered before, during, and after periods of strenuous physical activity. While the dietary supplement is described herein as being in a treat form, it is contemplated that the treat can be administered in other forms including, but not limited to, liquid and gel.

## Claims

1. A method for avoiding or reducing the undesirable effects of glycogen depletion in at least one of a pet's liver and muscles due to periods of strenuous activity comprising administering to the pet before and/or after the period of strenuous activity a food composition comprising:
carbohydrates which are easily assimilated by the pet and provide a readily available source of glucose; and
vitamins, minerals, and antioxidants to replenish at least some of the vitamins, minerals and anti-oxidants that are expended at a rate that is higher during strenuous activity than during non-strenuous activity, wherein the easily assimilated carbohydrates providing a readily available source of glucose include maltodextrin in an amount of between 15% and 45% by weight of the composition.

2. A method according to claim 1, wherein the maltodextrin is provided in an amount of between 25% and 35% by weight.

3. A method according to claim 1, wherein the vitamins comprise from 200 mg to 400 mg of vitamin E.

4. A method according to claim 1, wherein the vitamins comprise from 250 mg to 350 mg of vitamin C.

5. A method according to claim 1, wherein the antioxidants comprise between 0.5 mg to 10 mg of astaxanthin.

6. A method according to claim 1, wherein said carbohydrates, said vitamins, said minerals and said antioxidants comprise:
1.2% by weight calcium phosphate;
2.0% by weight corn syrup;
5.0% by weight dextrose;
30.0% by weight maltodextrin;
0.5% by weight mineral premix;
2.5% by weight molasses;
2.0% by weight potassium gluconate;
53.5% by weight rice flour;
1.0% by weight salt;
1.2% by weight vitamin C;
1.0% by weight vitamin E; and
less than 0.1% by weight vitamin premix.

7. A method according to claim 1, wherein the composition includes a vitamin premix comprising:
33% wheat flour;
18% vitamin E;
15% niacin;
10% calcium carbonate;
6% vitamin A;
6% calcium pantothenate;
5% thiamine;
2% riboflavin;
2% vitamin B-12;
1% pyridoxine hydrochloride;
less than 1% of folic acid;
less than 1% of vitamin D;
less than 1% of biotin; and
less than 1% of menadione sodium bisulfite complex.

8. A method according to claim 1, wherein the composition includes a mineral premix comprising:
66% salt;
16% zinc sulfate;
11% ferrous sulfate;
5% manganese sulfate;
1% copper sulfate;
less than 1% calcium iodate; and
less than 1% sodium selenite.

9. A method according to claim 1, wherein said composition is at least one of a solid treat, a liquid, and a gel.

10. A method according to claim 1 , which is a method of helping a pet recover from periods of strenuous activity.

11. A method according to claim 10, which is also a method of preparing a pet for periods of strenuous activity.

12. A method according to claim 1, which is a method of providing an energy boost to a pet in need thereof.

13. A food composition formulated to prepare a pet for strenuous activity and replenish nutrients in a pet after strenuous activity, said food composition comprising:
1.2% by weight calcium phosphate;
2.0% by weight corn syrup;
5.0% by weight dextrose;
30.0% by weight maltodextrin;
0.5% by weight mineral premix;
2.5% by weight molasses;
2.0% by weight potassium gluconate;
53.5% by weight rice flour;
1.0% by weight salt;
1.2% by weight vitamin C;
1.0% by weight vitamin E; and
less than 0.1% by weight vitamin premix.

14. A food composition according to claim 13, wherein the vitamin premix comprises:
33% wheat flour;
18% vitamin E;
15% niacin;
10% calcium carbonate;
6% vitamin A;
6% calcium pantothenate;
5% thiamine;
2% riboflavin;
2% vitamin B-12;
1% pyridoxine hydrochloride;
less than 1% of folic acid;
less than 1% of vitamin D;
less than 1% of biotin; and
less than 1% of menadione sodium bisulfite complex.

## Patentansprüche

1. Verfahren zur Vermeidung oder Reduzierung des unerwünschten Effekts des Glykogenabbaus in zumindest einem von Leber oder Muskulatur aufgrund von Perioden intensiver Anstrengung bei einem Haustier, aufweisend die Verabreichung einer Nahrungsmittelzusammensetzung an das Haustier, bevor und/oder nach den Perioden intensiver Anstrengung aufweisend:
- Kohlenhydrate, welche leicht durch das Haustier aufgenommen werden können und eine schnell verfügbare Glukosequelle darstellen; und
- Vitamine, Mineralstoffe und Antioxidantien zum Wiederauffüllen von zumindest einigen der Vitaminen, Mineralstoffe und Antioxidantien, welche während eine intensiven Anstrengung in einem höheren Maß verbraucht werden als in einer nichtintensiven Anstrengung,
wobei die leicht aufnehmbaren Kohlenhydrate, die eine schnell verfügbare Glukosequelle darstellen, Maltodextrin in einer Menge zwischen 15% und 45% Gewichtsprozent der Nahrungsmittezusammenstellung beinhalten.

2. Verfahren entsprechend Anspruch 1, wobei das Maltodextrin in einer Menge zwischen 15% und 45% Gewichtsprozent bereitgestellt wird.

3. Verfahren entsprechend Anspruch 1, wobei die Vitamine zwischen 200mg bis 400mg Vitamin E aufweisen.

4. Verfahren entsprechend Anspruch 1, wobei die Vitamine zwischen 250mg bis 350mg Vitamin C aufweisen.

5. Verfahren entsprechend Anspruch 1, wobei die Antioxidantien zwischen 0,5mg bis 10mg Astaxanthin aufweisen.

6. Verfahren entsprechend Anspruch 1, wobei die Kohlenhydrate, Vitamine, die Mineralstoffe und Antioxidantien aufweisen:
1,2% Gewichtsprozent Kalziumphosphat;
2,0% Gewichtsprozent Maissirup;
5% Gewichtsprozent Dextrose;
30% Gewichtsprozent Maltodextrin;
0,5% Gewichtsprozent Mineral-Premix;
2,5% Gewichtsprozent Melasse;
2,0% Gewichtsprozent Kaliumgluconat;
53,5% Gewichtsprozent Reismehl;
1,0% Gewichtsprozent Salz;
1,2% % Gewichtsprozent Vitamin C;
1,0%% Gewichtsprozent Vitamin E; und
weniger als 0,1%% Gewichtsprozent Vitamin-Premix.

7. Verfahren entsprechend Anspruch 1, wobei die Nahrungsmittelzusammenstellung einen Vitamin-Premix beinhaltet, aufweisend:
33% Weizenmehl;
18% Vitamin E;
15% Niacin;
10% Kalziumpantothenat;
5% Thiamine;
2% Riboflavin;
2% Vitamin B-12;
1% Pyridoxinhydrochlorid;
weniger als 1% Folsäure;
weniger als 1% Vitamin D;
weniger als 1% Biotin; und
weniger als 1% Menadoin-Natriumbisulfit-Komplex.

8. Verfahren entsprechend Anspruch 1, wobei die Nahrungsmittelzusammenstellung einen Mineral-Premix beinhaltet, aufweisend:
65% Salz;
16% Zinksulfat;
11% Eisensulfat;
5% Mangansulfat;
1% Kupfersulfat;
weniger als 1% Kalziumjodat; und
weniger als 1% Natriumselenit.

9. Verfahren entsprechend Anspruch 1, wobei diese Zusammenstellung wenigstens eines ist von einer feste Form, einer Flüssigkeit und einem Gel.

10. Verfahren entsprechend Anspruch 1, welches ein Verfahren zur Unterstützung eines Haustiers ist, welches sich von Perioden intensiver Anstrengung erholt.

11. Verfahren entsprechend Anspruch 10, welches ein Verfahren ist zur Vorbereitung eines Haustiers auf eine Periode intensiver Anstrengung.

12. Verfahren entsprechend Anspruch 1, welches ein Verfahren ist zur Bereitstellung eines Energieschubs für ein Haustier, welches diesen bedarf.

13. Nahrungsmittelzusammenstellung, die dazu formuliert ist, ein Haustier auf intensive Anstrengungen vorzubereiten und Nährstoffe in einem Haustier nach einer intensiven Anstrengung wieder aufzufüllen,
wobei diese Nahrungsmittelzusammenstellung aufweist:
1,2% Gewichtsprozent Kalziumphosphat;
2,0% Gewichtsprozent Maissirup;
5,0% Gewichtsprozent Dextrose;
30% Gewichtsprozent Maltodextrin;
0,5% Gewichtsprozent Mineral-Premix;
2,5% Gewichtsprozent Melasse;
2,0% Gewichtsprozent Reismehl;
1,0% Gewichtsprozent Salz;
1,2% Gewichtsprozent Vitamin C;
1% Gewichtsprozent Vitamin E; und
weniger als 0,1% Gewichtsprozent Vitamin-Premix.

14. Nahrungsmittelzusammensetzung entsprechend Anspruch 13, wobei der Vitamin-Premix aufweist:
335 Weizenmehl;
18% Vitamin E;
15% Niacin;
10% Calciumkarbonat;
6% Vitamin A;
6% Kalziumpantothenat;
5% Thiamine;
2% Riboflavin;
2% Vitamin B-12;
1% PyridoxinHydrochlorid;
weniger als 1% Folsäure;
weniger als 1% Vitamin D;
weniger als 1% Biotin; und
weniger als 1% Menadoin-Natriumbisulfit-Complex.

## Revendications

1. Procédé pour éviter ou réduire les effets indésirables d'une déplétion de glycogène dans au moins un élément parmi le foie et les muscles d'un animal de compagnie en raison de périodes d'activité intense, comprenant l'administration à l'animal de compagnie, avant et/ou après la période d'activité intense, d'une composition alimentaire comprenant :
des glucides qui sont facilement assimilés par l'animal de compagnie et fournissent une source de glucose facilement disponible ; et
des vitamines, minéraux et antioxydants pour reconstituer au moins une partie des vitamines, minéraux et antioxydants qui sont dépensés à un taux qui est plus élevé au cours d'une activité intense qu'au cours d'une activité non-intense, dans lequel les glucides facilement assimilés fournissant une source de glucose facilement disponible comprennent de la maltodextrine dans une quantité comprise entre 15% et 45% en poids de la composition.

2. Procédé selon la revendication 1, dans lequel la maltodextrine est fournie dans une quantité comprise entre 25% et 35% en poids.

3. Procédé selon la revendication 1, dans lequel les vitamines comprennent de 200 mg à 400 mg de vitamine E.

4. Procédé selon la revendication 1, dans lequel les vitamines comprennent de 250 mg à 350 mg de vitamine C.

5. Procédé selon la revendication 1, dans lequel les antioxydants comprennent entre 0,5 mg et 10 mg d'astaxanthine.

6. Procédé selon la revendication 1, dans lequel lesdits glucides, lesdites vitamines, lesdits minéraux et lesdits antioxydants comprennent :
1,2% en poids de phosphate de calcium ;
2,0% en poids de sirop de maïs ;
5,0% en poids de dextrose ;
30,0% en poids de maltodextrine ;
0,5% en poids de pré-mélange de minéraux ;
2,5% en poids de mélasse ;
2,0% en poids de gluconate de potassium ;
53,5% en poids de farine de riz ;
1,0% en poids de sel ;
1,2% en poids de vitamine C ;
1,0% en poids de vitamine E ; et
moins de 0,1% en poids de pré-mélange de vitamines.

7. Procédé selon la revendication 1, dans lequel la composition comprend un pré-mélange de vitamines comprenant :
33% de farine de blé ;
18% de vitamine E ;
15% de niacine ;
10% de carbonate de calcium ;
6% de vitamine A ;
6% de pantothénate de calcium ;
5% de thiamine ;
2% de riboflavine ;
2% de vitamine B-12 ;
1% de chlorhydrate de pyridoxine ;
moins de 1% d'acide folique ;
moins de 1% de vitamine D ;
moins de 1% de biotine ; et
moins de 1% de complexe de bisulfite de sodium ménadione.

8. Procédé selon la revendication 1, dans lequel la composition comprend un pré-mélange de minéraux comprenant :
66% de sel ;
16% de sulfate de zinc ;
11% de sulfate ferreux ;
5% de sulfate de manganèse ;
1% de sulfate de cuivre ;
moins de 1% d'iodate de calcium ; et
moins de 1% de sélénite de sodium.

9. Procédé selon la revendication 1, dans lequel ladite composition est au moins un élément parmi un traitement solide, un liquide et un gel.

10. Procédé selon la revendication 1, qui est un procédé consistant à aider un animal de compagnie à récupérer de périodes d'activité intense.

11. Procédé selon la revendication 10, qui est aussi un procédé consistant à préparer un animal de compagnie à des périodes d'activité intense.

12. Procédé selon la revendication 1, qui est un procédé consistant à fournir un surplus d'énergie à un animal de compagnie qui en a besoin.

13. Composition alimentaire formulée afin de préparer un animal de compagnie à une activité intense et reconstituer des nutriments chez un animal de compagnie après une activité intense, ladite composition alimentaire comprenant :
1,2% en poids de phosphate de calcium ;
2,0% en poids de sirop de maïs ;
5,0% en poids de dextrose ;
30,0% en poids de maltodextrine ;
0,5% en poids de pré-mélange de minéraux ;
2,5% en poids de mélasse ;
2,0% en poids de gluconate de potassium ;
53,5% en poids de farine de riz ;
1,0% en poids de sel ;
1,2% en poids de vitamine C ;
1,0% en poids de vitamine E ; et
moins de 1% en poids de pré-mélange de vitamines.

14. Composition alimentaire selon la revendication 13, dans laquelle le pré-mélange de vitamines comprend :
33% de farine de blé ;
18% de vitamine E ;
15% de niacine ;
10% de carbonate de calcium ;
6% de vitamine A ;
6% de pantothénate de calcium ;
5% de thiamine ;
2% de riboflavine ;
2% de vitamine B-12 ;
1% de chlorhydrate de pyridoxine ;
moins de 1% d'acide folique ;
moins de 1% de vitamine D ;
moins de 1% de biotine ; et
moins de 1% de complexe de bisulfite de sodium ménadione.
